# EUROPÄISCHE PATENTSCHRIFT

(11) **EP 1 083 992 B1**
(45) Veröffentlichungstag und Bekanntmachung des Hinweises auf die Patenterteilung: **23.04.2003**
(21) Anmeldenummer: 99927783.3
(22) Anmeldetag: 20.05.1999
(51) Int. Cl.: B01L 3/00, B01J 19/00, G01N 33/543

(54) **REAKTORTRÄGER MIT MEHREREN PORÖSEN MIKROPROBENAUFNAHMEKAMMERN**
REACTOR SUPPORT COMPRISING A PLURALITY OF MICRO SAMPLE ACCOMMODATING CHAMBERS
SUPPORT DE REACTEUR A PLUSIEURS CHAMBRES DE RECEPTION DE MICROECHANTILLONS

(30) Priorität: 10.06.1998 DE 19825909
(43) Veröffentlichungstag der Anmeldung: 21.03.2001
(73) Patentinhaber: Graffinity Pharmaceuticals Aktiengesellschaft, 69120 Heidelberg (DE)
(72) Erfinder: VETTER, Dirk, D-69120 Heidelberg (DE)
(74) Vertreter: Pfeiffer, Rolf-Gerd, Dipl.-Phys.
(86) Internationale Anmeldenummer: EP9903694
(87) Internationale Veröffentlichungsnummer: WO99064158

(56) Entgegenhaltungen:
- WO-A-94/28111
- WO-A-97/30784
- WO-A-98/08092
- DE-A- 3 723 004
- DE-A- 4 432 326

## Beschreibung

Die Erfindung betrifft einen Reaktorträger mit mehreren Mikroprobenaufnahmekammern, welcher insbesondere im automatisierten Laborbetrieb im Bereich der kombinatorischen Chemie zum Einsatz gelangt.

Es sind bereits seit Jahrzehnten Reaktionsgefäße bekannt, bei denen Probenpartikel in Form von Perlen für die Separation und Synthese im labortechnischen Bereich eingesetzt werden. Meistens handelt es sich dabei um Glas- oder Polymerkügelchen, welche Durchmesser von 0.01 mm bis 1 mm, typischerweise um die 0.1 mm, besitzen und trocken oder vorgequollen als loses Schüttgut in ein Reaktionsgefäß gefüllt und dann mit Flüssigkeit umspült werden, wobei zwischen der Festphasenoberfläche der Partikel und der sie umgebenden Flüssigkeit ein Adsorptions- oder Reaktionsprozeß abläuft (vgl. z.B. US 5,437,979). Verfahren der Säulenchromatographie, z.B. Gelfiltration, der Säulenextraktion, der Immundiagnostik, der Biomolekülreinigung, z.B. DNA-Reinigung, sowie der homogenen und heterogenen Synthese, z.B. von Oligonukleotiden, Peptiden oder kombinatorischen Substanzbibliotheken, nutzen diese Technik aus.

Neben der Automatisierung und Miniaturisierung von Labortechniken ist deren Parallelisierung von großem Interesse, um einen höheren Probendurchsatz zu erzielen und damit langwierige Verfahren zu beschleunigen. Zu diesem Zweck werden Proben oft in einem Raster angeordnet, so daß die Identität (Herkunft, Beschaffenheit) der Probe mit einer Flächenkoordinate verknüpft werden kann. Diese Koordinaten sind besonders für automatisierte Systeme zur Probenbearbeitung leicht zu erfassen. Für flüssige Proben sind daher sogenannte Mikrotiterplatten entwickelt worden, welche Kavitäten in rechtwinkligen Anordnungen von 8 x 12 (96 Proben), 16 x 24 (384) oder 32 x 48 (1536) tragen. Die Abmessungen der Kavitäten dieser Probenträger richten sich dabei nach den mit handelsüblichen Geräten, wie z.B. Pipetten, verläßlich dosierbaren Volumina und unterliegen mit dem Fortschreiten der Dosiertechnologie einer kontinuierlichen Miniaturisierung.

Üblicherweise werden die genannten Probenpartikel in mit Filterböden versehenen Probenbehältern zur Reaktion gebracht. Dabei sind die Seitenwandungen der Probenbehälter für die zum Einsatz gelangenden Flüssigkeiten undurchlässig, und die Partikel werden auf dem Filter gehalten. Flüssigkeiten werden von oben eingetragen und nach erfolgter Umsetzung durch den Filterboden gepreßt, abgesaugt oder ablaufen gelassen. Dies macht einen Flüssigkeitstransferschritt erforderlich; die Flüssigkeiten müssen aus den Kavitäten entnommen und in die Partikelbehälter eingefüllt werden. Hierfür werden herkömmlicherweise manuelle Pipetten oder Pipettierautomaten eingesetzt.

Der Transfer der Flüssigkeiten aus den Mikrotiterplattenkavitäten in die Behälter für die Probenpartikel bereitet oft Schwierigkeiten. Dies zeigt sich besonders bei Probenträgern, welche hochminiaturisiert sind. Das Pipettieren in Einzelschritten ist bei Rasteranordnungen von über 100 Proben aufgrund des hohen Zeitbedarfs nicht mehr praktikabel. Statt dessen finden Pipettierautomaten Anwendung, welche mehrfach parallel aspirieren und dispensieren können. Solche Automaten besitzen beispielsweise 96 gleichzeitig arbeitende pipettenartige Kolbenhubvorrichtungen. Nachteilig ist jedoch, daß die Geometrie und das Rastennaß der Pipettiervorrichtung oft nicht der Probenvorlage bzw. dem der Probenaufnahme entspricht. Dies gilt besonders für neuartige, besonders dicht gepackte Rasterformate. Dieses Problem kann zwar in dem besonderen Fall, daß die Abmessungen der Raster der Pipettiervorrichtung und der Probenträger ganzzahlige Vielfache darstellen, umgangen werden, indem der Pipettierroboter seriell mehrfache Befüllvorgänge abarbeitet. Beispielsweise können sechzehn herkömmliche Mikrotiterplatten mit 96 flüssigen Proben in sechzehn Transferschritten auf eine miniaturisierte Titerplatte mit 1536 Kavitäten umgruppiert werden. Hierbei ist jedoch wiederum ein Zeitverlust hinzunehmen, welcher sich bei reaktionskinetisch sensiblen Umsetzungen ungünstig auswirkt.

Neben den vorstehend beschriebenen technischen Lösungen sind weitere Mikrotiterplatten bzw. Vorrichtungen, die in Mikrotiterplatten eingebracht werden sollen, bekannt.
So ist in der EP 0 296 415 A2 eine Titerplatte beschrieben, die mit Einsätzen aus biochemisch kompatiblen mikroporösen Oberflächen versehen ist, an welche biologisches Material anbinden kann. Die konstruktive Ausgestaltung dieser Einsätze erfolgt dort mit der Maßgabe, daß die Titerplatte in ein Spektrometer einbringbar ist.
In der US 5,417,923 ist eine Anordnung zur Aufnahme mehrerer Proben offenbart, die aus einer Test- und einer Sammelplatte besteht. Dabei beinhaltet die Testplatte Kammern, die mit chromatografischem Material zwischen zwei Fritten gefüllt sind.
Eine Fütrationsvorrichtung ist in der WO 96/39250 A1 beschrieben, die mit Öffnungen versehene Seitenwände beinhaltet, denen Membranfilter vorgeordnet sind, wobei der Bodenbereich der dortigen Aufnahmen ausdrücklich von Filterkörpern freigehalten wird, um ein Verlangsamen der Filtration durch eine Barriere auf der Membran zu vermeiden.
Die WO 93/00420 A1 offenbart eine Vorrichtung zur Behandlung von Gewebekulturen, die u.a. eine Filterplatte enthält, in die Gefäße einbringbar sind, die einen geschlossenen Wandungsbereich und einen mit einem Filter versehenen Boden aufweisen. Weiterhin sind dort Mittel vorgesehen, die eine Positionierung genannter Bodenbereiche der Gefäße in bezug auf die Titerplatte zwecks Minimierung von Kapillarkräften bewirken.
Die DE 91 00 320 U1 beschreibt eine Mikrotestplatte mit mehreren Aufnahmekammern, in die auf einer Pinplatte angeordnete Pins einbringbar sind. Die Pins sind dabei mit Antigenen bzw. Allergenen oder dergleichen beladen und ihre Anordnung auf der Pinplatte korrespondiert mit der Anordnung der Aufnahmekammern der Mikrotestplatte.
Eine weitere Titerplatte ist in der DE 33 36 738 A1 beschrieben, die separat austauschbare Einsätze aufweist, welche der Aufnahme von Zapfen dienen, die vergleichbar zu der DE 91 00 320 U1 auf einer weiteren Platte angeordnet sind, wodurch sich ebenfalls eine allseits geschlossene Anordnung ergibt.
Schließlich ist der WO 94/28111 A1 eine Vorrichtung für Gewebekulturen zu entnehmen, die mehrere Einsätze mit ebenfalls seitlich geschlossenen Wänden und einem porösen Boden aufweist. Diese Lösung ist vergleichbar mit der zuvor zitierten WO 93/00420 A1.
Die vorstehend beschriebenen Vomichtungen weisen Merkmale auf, die auch in dem vorliegenden Reaktorträger vorhanden sind. Sie sind jedoch zur Lösung der nachstehenden Aufgabe nicht geeignet.

Der Erfindung liegt die Aufgabe zugrunde, einen Reaktorträger mit mehreren Mikroprobenaufnahmekammern anzugeben, der auf einfache Weise eine Beschickung der einzelnen Probenaufnahmekammern mit Probenpartikel ermöglicht und vor allem eine gleichzeitige reproduzierbare Flüssigkeitsbefüllung aller Probenaufnahmekammern oder eines definiert auswählbaren Teils von Probenaufnahmekammern ohne zusätzliche Pipettierschritte, wie nach dem Stand der Technik üblich, gestattet.

Die Aufgabe wird durch einen Reaktorträger mit den Merkmalen des Anspruchs 1 gelöst. Vorteilhafte Ausgestaltungen sind Gegenstand der Unteransprüche.

Der Reaktorträger soll nachstehend anhand schematischer Ausführungsbeispiele näher erläutert werden. Es zeigen:
- Fig. 1: einen Ausschnitt aus einem Reaktorträger mit einem eingebrachten porösen Formkörper und einer ersten Art einer Flüssigkeitseinbringung im Schnitt,
- Fig. 2: einen Ausschnitt aus einem Reaktorträger nach Fig. 1 mit einer zweiten Art einer Flüssigkeitseinbringung in den Formkörper im Schnitt,
- Fig. 3: eine perspektivische Ansicht eines Teils eines Reaktorträgers mit mehreren eingebrachten Formkörpern,
- Fig. 4: eine perspektivische Ansicht einer Stapelmöglichkeit von mit Formkörpern versehenen Reaktorträgern und
- Fig. 5: eine weitere Einbringungsmöglichkeit eines Formkörpers in den Reaktorträger.

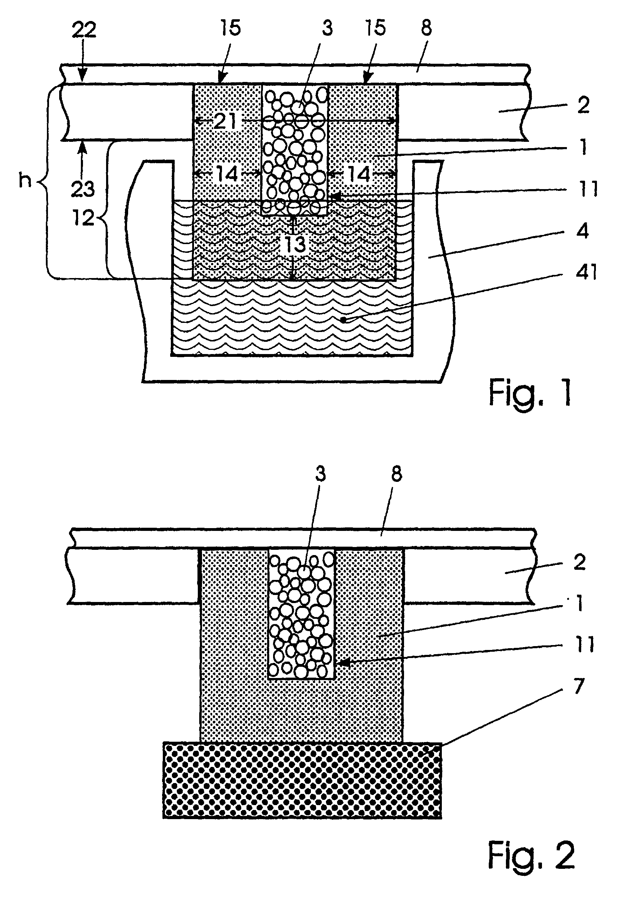

Die nach dem Stand der Technik bestehenden Schwierigkeiten bei der Umverteilung von flüssigen Proben werden vermieden, indem ein spezieller Formkörper 1 verwendet wird, der mit seinen wesentlichen Merkmalen in Figur 1 im Schnitt dargestellt ist. In eine Platte 2, von der in Fig. 1 nur ein Ausschnitt dargestellt ist, sind Ausnehmungen 21 eingebracht, die der Aufnahme und Halterung des Formkörpers 1 dienen. Der Formkörper 1 ist dabei derart in die Platte 2 eingebracht, daß er mit seinem oberen Berandungskranz 15 mit der ersten Plattenoberfläche 22 bündig abschließt oder leicht zurückgesetzt, d.h. vertieft, eingelassen ist, wohingegen er die zweite Plattenoberfläche 23 mit seinem verbleibenden Teil 12 überragt. Insbesondere nimmt dieser überragende Teil 12 wenigstens zur Hälfte der Formkörperhöhe h ein. Der Formkörper 1 selbst ist in all seinen Wandungsbereichen, bestehend aus den seitlichen Wandungen 14 und dem Bodenbereich 13, porös ausgebildet und weist eine mittige Ausnehmung 11 auf, in die eine Vielzahl von Probenpartikeln 3 eingebracht sind. Wird dieser Formkörper 1 durch Absenken der Platte 2 in ein mit Flüssigkeit gefülltes Gefäß 4 eingetaucht, erfolgt eine definierte Flüssigkeitsbefüllung des Formkörpers 1 auf passive Weise von unten bzw. über die seitlichen Formkörperwandungen 14. Die Porosität des Formkörpers 1 als auch die Durchmesserverteilung der in die Ausnehmung 11 eingebrachten Partikelpackung ist dabei so festgelegt, daß ein Flüssigkeitsaufstieg innerhalb des Formkörpers im wesentlichen durch Kapillarkräfte bewirkt wird.
Gleichzeitig wirken die Formkörperwandungen bei entsprechender Porositätsdimensionierung als Filter.
Bevorzugt finden für den Formkörper 1 poröse Materialien auf Kunststoffbasis Verwendung. Die Herstellung solcher Stoffe erfolgt durch einen Sinterprozeß bei ca. 150°C aus Granulat auf Polyethylen-, Polypropylen- oder Polytetrafluorethylenbasis. Es sind jedoch auch poröses Glas oder Silizium, Keramiken oder Metallfritten verwendbar. Bei einer Porengröße von 1 - 250 µm, im Beispiel von 18 - 40 µm, einer Porosität (Anteil des Porenvolumens am Gesamtvolumen) der im Rahmen der Erfindung eingesetzten Formkörper im Bereich von 5 - 75%, im Beispiel 35% und einer Porosität der in der Ausnehmung 11 vorgesehenen Probenpartikelpackung von 5 - 95%, im Beispiel 50%, mit einer mittleren Durchmesserverteilung der Probenpartikel in der Größenordnung von 5 - 500 µm ist bereits nach einer Zeit von 0,1 - 10 s eine vollständige definierte Befüllung der Ausnehmung 11 erreicht, wenn ausreichend Flüssigkeit in einer Kavität 41 zur Befüllung bereitgestellt ist. Die aufgenommene Flüssigkeitsmenge ist durch das Gesamtporenvolumen des Formkörpers bestimmt. Dies bedeutet, daß der Befüllvorgang hochgradig reproduzierbar ist; ein durch den Formkörper gebildeter Behälter nimmt immer die gleiche Menge an Flüssigkeit auf.
Das Innere der Ausnehmung 11 ist dabei homogen mit Probenpartikeln 3 befüllt. Vorteilhafterweise sind die Durchmesser der Partikel größer festgelegt als die Poren der Wandungen 14 und des Bodens 13. Durch die lose Schüttung und die enge Packung der Partikel werden bei Flüssigkeitszufuhr auch innerhalb des Reaktionsgefäßes Kapülarkräfte wirksam. Bei einem geeigneten Volumenverhältnis zwischen der die Partikel 3 haltenden Ausnehmung 11 des Formkörpers 1 und seinen porösen Wandungen, wobei letzteren bevorzugt ein größeres Volumen gegeben sein soll und insbesondere in der Größenordnung von 0,1 - 100 µl festgelegt ist, wird die Ausnehmung 11 bei der Flüssigkeitsaufnahme bis zu ihrem oberen Berandungskranz 15 wohldefiniert befüllt. Dadurch werden die eingelagerten Partikel 3 nicht nur vollständig benetzt, sondern auch im Falle des Überangebots von flüssigem Reagenz mit einem genau bestimmbaren Volumen umgesetzt, was die Kontrolle von Reaktionsführungen erheblich gegenüber dem Stand der Technik erleichtert. Die Reaktionsabläufe werden gut kontrollierbar, da die Menge an in Lösung befindlichem Reagenz genau bemessen werden kann. Die Aliquotierung bzw. Bemessung der Flüssigkeitsmenge wird durch das Volumen des porösen Formkörpers 1 definiert und bedarf keiner Pipettiertechnik, welche unweigerlich Schwankungen bei Wiederholung des Befüllungsvorgangs mit sich bringt. Die Variabilität zwischen den einzelnen Formkörpern, welche sich unmittelbar auf das aufzunehmende Volumen auswirkt, ist gering, da die geometrischen Abweichungen durch eine präzise feinmechanische Fertigung der Formkörper minimal ausfallen, einer vorhergehenden Qualitätskontrolle unterliegen und sich von Befüllschritt zu Befullschritt nicht verändern können.

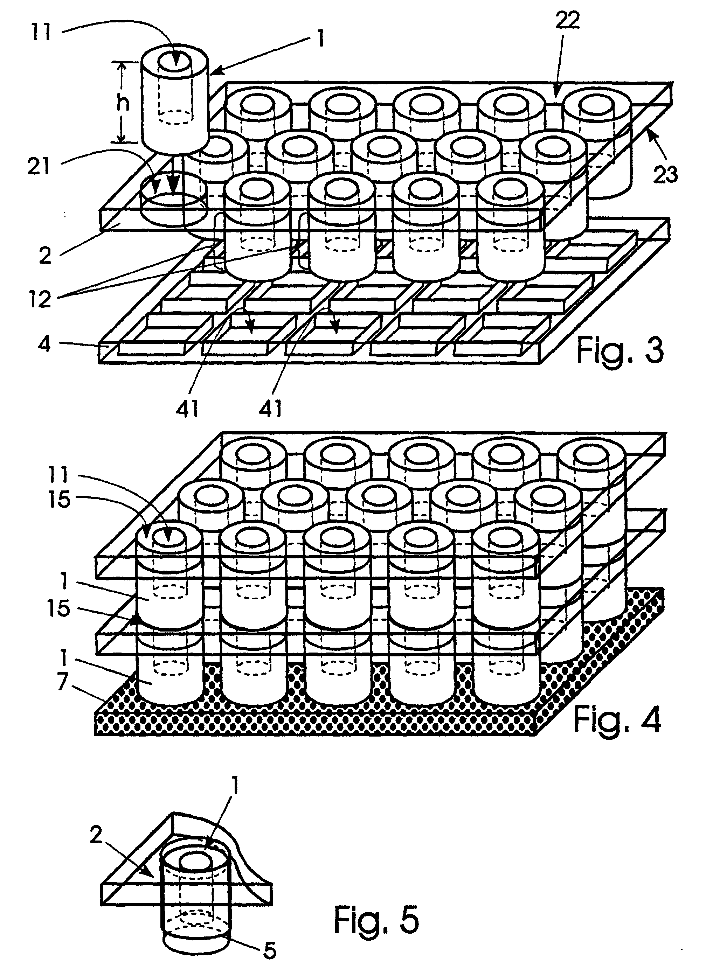

Die durch die Formkörper 1 gebildeten Mikroreaktionsgefäße, die im Beispiel eine Höhe h von 3,1 mm und einen Außendurchmesser von 1,75 mm besitzen, weisen die nach oben hin geöffnete Ausnehmung 11 auf, um das Einbringen der Probenpartikel in loser Form in einfacher Weise durch Aufschüttung zu gewährleisten. Nach Befüllung werden überschüssige Pardkel entfernt und der gesamte Reaktorträger ist, oder vorgebbare Teilbereiche sind, durch eine Abdeckung 8, insbesondere gebildet durch eine Folie, insbesondere eine selbstklebende Folie, verschließbar. Hier offenbart sich ein weiterer Vorteil der Erfindung: selbst wenn die Reaktoroberseite durch eine Abdeckung 8 und Bereiche der Formkörperseitenwand 14 durch die Ausnehmung 21 oder eine flüssigkeitsundurchlässige Wandung, wie einer in die Ausnehmung 21 eingebrachten Hülse 5 (vgl. Fig. 5), abgedeckt sind, erfolgt die Selbstbefüllung von unten immer noch vollständig unter Erfassung des Gesamtreaktorvolumens. Dies ist bei den nach dem Stand der Technik üblichen Reaktionsgefäßen mit massiven Wandungen, wie beispielsweise Kapillaren oder Röhrchen, unmöglich, da Luftblasen das Aufsteigen der Flüssigkeit verhindern.

Figur 3 zeigt eine perspektivische Ansicht eines Teils einer transparent dargestellten Platte 2 mit mehreren eingebrachten Formkörpern 1. Die Einbringung der Formkörper 1 in die Ausnehmungen 21 und deren Anordnung erfolgt in diesem Beispiel derart, daß ihre Positionierung korrespondiert mit der Verteilung von Kavitäten 41 einer aus Gefäßen 4 bestehenden Mikrotiterplatte. Reaktorträger mit derartig passiv befüllbaren Formkörpern 1 können ohne Verwendung aufwendiger Automatisierungstechnik direkt auf die flüssigkeitsgefüllten Gefäße 4 der Mikrotiterplatte aufgesetzt werden. Die Flüssigkeiten aus der in der Mikrotiterplatte vorgelegten Vielzahl an Proben steigen dann simultan in die als Reaktionsbehälter dienenden Formkörper 1 und benetzen die dort gehaltenen Partikel 3, wobei genau ein Reaktionsbehälter eine Flüssigkeit aus einer Kavität aufnimmt. Der Außendurchmesser der Partikelbehältnisse ist dabei kleiner gewählt als der Innendurchmesser der Kavitäten, so daß die Formkörper 1, innerhalb derer die gewünschte Reaktion ablaufen soll, in die Kavitäten eingelassen werden können und die darin befindlichen Flüssigkeiten kontaktieren.

Ebenso liegt es im Rahmen der Erfindung, die Flüssigkeitszufuhr, statt über gefüllte Kavitäten von Mikrotiterplatten, durch Vorlage zum Bodenbereich der Formkörper komplementär ausgebildeter, flüssigkeitsgetränkter oder weiterleitender poröser Strukturen 7 zu gewährleisten. In Figur 2 ist, bei ansonsten gleichen Verhältnissen wie in Fig. 1, eine solche, jeweils nur einem Formkörper zugeordnete Struktur 7 angedeutet; in Figur 4 ist diese Struktur als eine alle Formkörperbodenbereiche erfassende durchgängig ausgeführte Struktur 7 dargestellt. Die Paßgenauigkeit im Kontaktbereich garantiert in jedem Fall der Ausbildung der Struktur 7 einen effektiven Flüssigkeitsübertritt durch Kapillarkräfte. Für eine derartige flüssigkeitübertragende Struktur können Filterpapiere oder strukturierte poröse Kunststoffe, Gläser oder Keramiken eingesetzt sein. Darüber hinaus ist in Fig. 4 ersichtlich, daß mehrere identisch ausgebildete Platten 2 übereinander stapelbar sind, wobei der Flüssigkeitsübertritt von den unteren Formkörpern in die Formkörper der nächsten Ebene wiederum durch Kapillarkräfte über den oberen Berandungskranz 15 eines jeden Formkörpers 1 erfolgt. Diese Stapelung von Platten 2 ist für hochparallele Verfahren, wie sie beispielsweise in der kombinatorischen Chemie üblich sind, sinnvoll nutzbar.
Der besondere Vorteil entsprechend mikrostrukturierter poröser Strukturen 7 als Flüssigkeitsspender ist die Möglichkeit einer kombinatorischen Befüllung. Hierbei werden Bereiche einer die Formkörper 1 als Reaktionsbehälter tragenden Platte 2 gleichzeitig oder in Folge mit unterschiedlichen flüssigen Proben benetzt. Die Verwendung von passend geschnittenen oder strukturierten Flüssigkeitsspendern bewirkt die Entstehung eines die Selbstbefüllung ermöglichenden Übergangsgebietes nur an den dafür vorgesehenen Bereichen. Beispielsweise können durch eine in Längsstreifen ausgeführten Befüllstruktur auf einem quadratischen Reaktorträger im Raster 96 x 96 abwechselnd die Reaktionsgefäße im Zeilen- und Spaltenmuster mit jeweils 96 verschiedenen Flüssigkeiten benetzt werden. Diese "orthogonal" genannte Flüssigkeitsverteilung ist in der kombinatorischen Chemie bspw. gebräuchlich für die Synthese von Substanzbibliotheken.

Oberflächenbereiche der Formkörper, welche nicht als Kontaktbereich für die Flüssigkeitsaufnahme verwendet werden sollen, können durch flüssigkeitsundurchlässige Wandungen abgedeckt sein. In Figur 5 ist eine weitere Einbringungsmöglichkeit eines Formkörpers in die Platte 2 in einem Teilschnitt dargestellt, bei dem in die Ausnehmung 21 der Platte 2 zunächst eine Hülse 5 eingebracht ist, welche ihrerseits den einen Formkörper 1 derart aufnimmt, daß lediglich über den Bodenbereich des Formkörpers eine Flüssigkeitszufuhr gewährleistet ist.

### Bezugszeichenliste

- 1: - Formkörper
- 11: - Ausnehmung im Formkörper 1
- 12: - die zweite Plattenoberfläche überragender Formkörperteil
- 13: - Bodenbereich des Formkörpers 1
- 14: - seitliche Wandungen des Formkörpers 1
- 15: - oberer Berandungskranz des Formkörpers 1
- 2: - Platte
- 21: - Ausnehmung in der Platte 2
- 22: - erste Oberfläche der Platte 2
- 23: - zweite Oberfläche der Platte 2
- 3: - Probenpartikel
- 4: - Flüssigkeitsgefäß (Mikrotiterplatte)
- 41: - Kavität
- 5: - Hülse
- 7: - poröse Strukturen als Flüssigkeitsspender
- 8: - Abdeckung

## Patentansprüche

1. ReakLorträger mit mehreren, einseitig offenen, mit einer Abdeckung verschließbaren Mikroprobenaufnahmekammern, in die eine Vielzahl von Probenpartikeln in Form von rieselfähigen Mikrokörpern aufnehmbar sind und die Mikroprobenaufnahmekammern mit der Oberfläche des Reaktorträgers abschließen und an der geschlossenen Seite aus diesem herausragen und im Bodenbereich eine Öffnung zum Flüssigkeitstransfer aufweisen, **dadurch gekennzeichnet daß** in eine Platte (2) durchgängige Öffnungen (21) eingebracht sind, in die jeweils ein Formkörper (1), der in allen Wandungsbereichen (13, 14) porös so ausgebildet ist, daß ein Flüssigkeitsübergang und -aufstieg in den Formkörper (1) im wesentlichen durch Kapillarkräfte bewirkbar ist, wobei die mittlere Durchmesserverteilung der Probenpartikel (3) größer ist als die Poren der Formkörper (1), jedoch noch so klein ist, daß ein Flüssigkeitsaufstieg in der Partikelschüttung innerhalb der Formkörperausnehmung (11) ebenfalls im wesentlichen durch Kapillarkräfte bewirkbar ist, derart eingepaßt ist, daß der Formkörper (1) mit der Seite seiner geöffneten Ausnehmung (11) mit einer ersten Oberfläche (22) der Platte (2) bündig abschließt oder in diese zurückgesetzt eingebracht ist und mit seinem verbleibenden Teil (12) aus der zweiten Oberfläche (23) der Platte (2) herausragt und ausschließlich dieser herausragende Teil (12) zumindest in seinem Bodenbereich mit flüssigkeitszuführenden Mitteln (4, 41; 7; 15) in Verbindung bringbar ist.

2. Reaktorträger nach Anspruch 1, **dadurch gekennzeichnet, daß** der die zweite Oberfläche (23) der Platte (2) überragende Teil (12) des Formkörpers (1) mindestens die Hälfte der gesamten Formkörperhöhe (h) aufweist.

3. Reaktorträger nach Anspruch 1 oder 2, **dadurch gekennzeichnet, daß** für eine Befüllung der Formkörper (1) mit einer Flüssigkeit ausschließlich die Bodenbereiche (13) und/oder die seitlichen Wandungen (14) der Formkörper (1) einsetzbar sind.

4. Reaktorträger nach einem der Ansprüche 1 bis 3, **dadurch gekennzeichnet, daß** die durchgängigen Öffnungen (21) der Platte (2) und damit die Formkörper (1) entsprechend den Kavitäten (41) eines vorlegbaren Flüssigkeitstbehältnisses, beispielsweise einer Mikrotiterplatte, angeordnet sind.

5. Reaktorträger nach Anspruch 1 **dadurch gekennzeichnet, daß** die Formkörper (1) durch ein gesintertes Kunststoff- oder Glasgranulat oder ein Schaumglas oder poröses Silizium oder eine Keramik oder Metallfritte gebildet sind, wobei die Porosität in der Größenordnung von 5 - 75% liegt.

6. Reaktorträger nach einem der Ansprüche 1 bis 5, **dadurch gekennzeichnet, daß** das durch die seitlichen Wandungen (14) und den Bodenbereich (13) gebildete Volumen des porösen Formkörpers (1) größer ist, als das Volumen der in ihn eingebrachten Ausnehmung (11) und damit größer als das Gesamtvolumen der in diese Ausnehmung eingebrachten Partikel (3).

7. Reaktorträger nach Anspruch 6, **dadurch gekennzeichnet, daß** das Verhältnis des porösen Formkörperwandungsvolumens zum Volumen der Ausnehmung (11) in der Größenordnung von 1000 : 1 bis 1:1 liegt.

8. Reaktorträger nach einem der Ansprüche 1 bis 7, **dadurch gekennzeichnet, daß** die Formkörper (1) in ihren seitlichen Wandungsbereichen (14) von einer flüssigkeitsundurchlässigen Wandung umfaßt sind.

9. Reaktorträger nach Anspruch 8, **dadurch gekennzeichnet, daß** die flüssigkeitsundurchlässige Wandung durch eine in die Ausnehmung (21) der Platte (2) eingelassene Hülse (5) gebildet ist

10. Reaktorträger nach einem der Ansprüche 1 bis 9, **dadurch gekennzeichnet, daß** eine Abdeckung (8) mehrere in einer Reihe angeordnete Formkörper (1) überdeckt

11. Reaktorträger nach einem der Ansprüche 1 bis 9, **dadurch gekennzeichnet, daß** die Abdeckung (8) alle in der Platte (2) angeordneten Formkörper (1) überdeckt.

12. Reaktorträger nach Anspruch 10 oder 11, **dadurch gekennzeichnet, daß** die Abdeckung (8) durch eine einseitig selbsfklebende Folie gebildet ist.

## Claims

1. Reactor support comprising a plurality of micro-sample receiving chambers open to one side and adapted to be closed by a cover, a plurality of sample particles in the form of flowable micro-bodies being receivable in said micro-sample receiving chambers, said micro-sample receiving chambers being flush with the surface of said reactor support, and projecting from out of the closed side of said reactor support, and being provided with an opening in the bottom range for liquid transfer, **characterized in that** through-going openings (21) are provided in a plate (2), into which one shaped body (1) each is provided, all wall ranges (13, 14) of said shaped body (1) are designed porously in such a way, that a liquid transfer to and a rising of the liquids in the shaped body (1) is substantially effectable by capillary forces, whereby the mean diameter distribution of the sample particles (3) is greater than the pores of the shaped bodies (1), however, still small enough that a rising of liquids in the packed particles within the shaped body recess (11) is also and substantially effectable by the capillary forces, said shaped body (1) being fitted into said through-going opening (21) in such a way that the side of its open recess (11) is flush with a first surface (22) of the plate (2) or is inserted into and slightly set back relative to said first surface (22), and by its remaining portion (12) projects beyond the second plate surface (23) of the plate (2), and exclusively this projecting portion (12) at least via its bottom area is adapted to be brought into contact with liquid supplying means (4, 41; 7; 15).

2. Reactor support as claimed in claim 1, **characterized in that** said portion (12) of said shaped body (1) projecting beyond the second plate surface (23) of the plate (2) takes at least half the entire height (h) of the shaped body.

3. Reactor support as claimed in claim 1 or 2, **characterized in that** the bottom areas (13) and/or the side walls (14) are exclusively adapted for use in filling the shaped body (1) with a liquid.

4. Reactor support as claimed in one of the claims 1 to 3, **characterized in that** the through-going openings (21) of the plate (2) and, hence, the shaped bodies (1) are arranged corresponding to the cavities (41) of a pre-attachable liquid receptacle, for example, a micro-titer plate.

5. Reactor support as claimed in claim 1, **characterized in that** the shaped bodies (1) are made of a sintered plastic granulate or a glass granulate or foamed glass or porous silicon, or a ceramics or metal frits, whereby the porosity lies in an order of size of from 5 - 75%.

6. Reactor support as claimed in one of the claims 1 to 5, **characterized in that** the volume of the porous shaped body (1) formed by the side walls (14) and by the bottom area (13) is greater than the volume of the recesses (11) inserted into it and, thus, greater than the entire volume of the particles (3) brought into these recesses.

7. Reactor support as claimed in claim 6, **characterized in that** the ratio of the volume of the porous shaped body walls to the volume of the recesses (11) lies in an order of size from 1000:1 to 1:1.

8. Reactor support as claimed in one of the claims 1 to 7, **characterized in that** the side wall ranges (14) of the shaped body (1) are captured by a wall impermeable by liquids.

9. Reactor support as claimed in claim 8, **characterized in that** the wall impermeable by liquids is formed by a shell (5) inserted into the recess (21) of the plate (2).

10. Reactor support as claimed in one of the preceding claims 1 to 9, **characterized in that** a cover (8) covers a plurality of shaped bodies (1) arranged in a row.

11. Reactor support as claimed in one of the claims 1 to 9, **characterized in that** the cover (8) covers all the shaped bodies (1) arranged in the plate (2).

12. Reactor support as claimed in claim 10 or 11, **characterized in that** the cover (8) is formed by a one-side self-adhesive foil.

## Revendications

1. Support de réacteur comprenant plusieurs compartiments ouverts sur un côté, pouvant être fermé au moyen d'un couvercle et chargé de micro-échantillons, permettant d'y placer une multitude d'échantillons sous forme de particules de microcorps en vrac et ruisselants, les compartiments à micro-échantillons étant conçus de sorte qu'ils soient au raz de la surface du support, que, sur le côté fermé, ils dépassent le support et qu'ils présentent une ouverture au sol permettant le transfert de fluides, est **caractérisé en ce qu'**un plateau (2) est doté d'orifices (21) dans lesquels sont placés des corps aux formes déterminées (1) et aux parois poreuses (13, 14) permettant le passage et la montée du fluide dans le corps (1), dans l'essentiel par moyen des forces capillaires, le diamètre moyen des particules-échantillons (3) étant supérieur au diamètre des pores du corps à forme déterminée (1), mais d'autre part étant encore suffisamment petit pour que la montée du fluide, à travers les particules versées dans les compartiments, dans l'évidement (11) du corps à forme déterminée (1) , s'obtienne également dans l'essentiel par l'intervention des forces capillaires, la surface du corps à forme déterminée(1), sur le côté de l'évidement ouvert (11) se situant précisément soit au raz d'une première surface (22) du plateau (2) soit un peu en recul de sorte qu'au moins la partie (12) dépassant la deuxième surface (23) du plateau (2) puissent entrer en contact, au moins au sol, avec les agents fluides amenés (4, 41; 7; 15).

2. Support suivant la revendication 1 est **caractérisé en ce que** la grandeur de la partie (12) du corps à forme déterminée (1), dépassant la deuxième surface (23) du plateau (2), est au moins égale à la moitié de la hauteur totale (h) du corps de forme déterminée.

3. Support suivant la revendication 1 ou 2 est **caractérisé en ce que** le remplissage d'un fluide des corps aux formes déterminées (1) se fait uniquement par le sol (13) et/ou par les parois latérales (14) des corps aux formes déterminées (1).

4. Support selon une des revendications 1 à 3 est **caractérisé en ce que** les orifices de passage (21) et, par conséquent, les corps aux formes déterminées (1) sont disposés sur le plateau (2) de sorte qu'ils se trouvent en face des cavités (41) d'un récipient contenant le fluide, par ex. d'une micro-plaque de titrage.

5. Support suivant la revendication 1 est **caractérisé en ce que** la matière première utilisée pour la fabrication des corps aux formes déterminées (1) est soit un granulat de verre ou de matière plastique vitrifiée soit un verre mousse ou un silicium poreux ou une céramique ou une fritte métallique aux porosités allant de 5 à 75%.

6. Support selon les revendication 1 à 5 est **caractérisé en ce que** le volume du corps à forme determinée (1) entre les parois latérales (14) et du sol (13) est plus grand que celui de l'évidement appliqué (11) et donc supérieur au volume total des particules introduites dans l'évidement (3).

7. Support selon la revendication 6 est **caractérisé en ce que** le rapport entre le volume des parois poreuses du corps à forme déterminée et le volume de l'évidement (11) est égal au rapports allant de 1000 : 1 jusqu'à 1 : 1.

8. Support selon les revendications 1 à 7 est **caractérisé en ce que** les parois latérales (14) des corps aux formes déterminées (1) sont entourées d'une enceinte imperméable.

9. Support suivant la revendication 8 est **caractérisé en ce que** l'enceinte imperméable est formée par une douille (5) introduite dans l'évidement (21) du plateau (2).

10. Support selon une des revendications 1 à 9 est **caractérisé en ce que** le couvercle (8) recouvre plusieurs corps aux formes déterminées (1) disposés en série.

11. Support selon une des revendications 1 à 9 est **caractérisé en ce que** le couvercle (8) recouvre tous les corps aux formes déterminées (1) disposés sur le plateau (2).

12. Support selon la revendication 10 ou 11 est **caractérisé en ce que** le recouvrement (8) est assuré par une feuille plastique dont une surface est autocollante.
